# EUROPEAN PATENT APPLICATION

(11) **EP 2 472 422 A1**
(43) Date of publication of application: **04.07.2012**
(21) Application number: 10197025.9
(22) Date of filing: 27.12.2010
(51) Int. Cl.: G06F 21/00, G06Q 10/00

(54) **Improved management of software licenses in a computer network**

(71) Applicant: Siemens Aktiengesellschaft, 80333 München (DE)
(72) Inventor: Marsano Sonia, 16011, Arenzano (GE) (IT); Russo, Francesco, 16011, Arenzano (GE) (IT)
(74) Representative: Fischer, Michael

(57) **Abstract**

Management of Software licenses in Client-Server mode starts with a license policing based on clustering, nominally, into differently valued bundles many variegated applications to be licensed. Applications have an initial size which could be successively upgraded on request. Size may encompass a variable number of different Entities, such as: personal computers, equipments to be modeled in a MES environment, client connections, XML tags identifying objects in a database, etc. Two management processes run concurrently at the Server side: 1) a first one is dedicated to distribute licenses for new software applications and licenses for upgrading to new versions of previously licensed applications, and further checking any attempt to violate a software license; 2) while a second one, upon reception of specific requests by licensees, calculates the number of credits which are needed for upgrading the size previously licensed for applications, checks that available credits at the requesters be sufficient for upgrading, otherwise sends back a warning for insufficient credits.

## Description

### FIELD OF THE INVENTION

The present invention relates to the handling of computer software license, and more precisely to an improved management of software licenses in a computer network.

### BACKGROUND ART

According to the Information Technology (IT), an "application", which generally needs a software license to run, is a computer program designed to help people to perform singular or multiple related specific tasks. It helps to solve problems in the real world. Examples include: - enterprise software - automation control software - accounting software - office suites - graphics software, etc. It is common practice by the application developers to commercialize different implementations of the same version of an application, distinguished to each other by different embedded features and the respective prices, for example the popular Windows® operating system of Microsoft® is sold as standard, professional, small business, network version, etc. An application suite consists of multiple applications bundled together; they usually have related functions, features and user interfaces, and may be able to interact with each other, for example well known Microsoft Office. It can be argued the large impact of the application software in all human activities and the consistent business derived for application developers, consequently. Except for open source which is shared free software, the majority of software applications is legally protected by patent or copyright law. A software license is an agreement between a software owner and a licensee by which the owner gives the licensee the right to use the patented or copyrighted software product in the licensed environment. To be more precise, "Product" means software and documentation delivered to end-users under a single trade name. "Maintenance Expiration Date" means the end of the maintenance period, as set forth in the license agreement (normally one year). "License Key" means a short electronic file(s) that have been delivered to licensee as a consequence of the license agreement, and that provides technical means for running the Product and that contains detailed information about the type of license and license options (usually a code). "Authorized Person" means either: a) private individual licensee, or if licensee is a legal entity, any person within the scope of their employment or assignment. Usually software licenses are non-exclusive and non-transferable and bound the licensee to Install them on a single or a fixed number of computers. Licenses are mostly purchased directly from the WEB, and the subscribers receive license keys for activation immediately after the relevant payments are correctly received.

Presently, several License Manager (LM) software frameworks are known in commerce, these LMs are designed by the main software corporations which handle hundred thousand or million licenses for variegate software products, for example:
- The Automation License Manager V3.0 developed for new S7 PLC (Programmable Logic Controller) of SIMATIC (Siemens AG). Based on the new License Manager you can manage the floating license online. The license keys are stored on a central computer that serves as server computer. The SIMATIC Logon add-on package must also be installed. Using Logon you can conveniently control the use of your licenses on the local computer or on computers in a workgroup. Unauthorized access to licenses is prevented by a logon dialog and user administration. If there is no corresponding license available locally, you can use the license from the license key server.
- Microsoft manages an impressive lot of licenses for variegated software products under its Volume Licensing Program. Additional services (e.g. support and training, special benefits) for the licensed products are offered on subscription to the Software Assurance program (SA). Discounts are based on the purchaser profiles and the number of installations. The License Manager activates a blocking technology called Genuine Advantage that will require people to validate their copies of Windows before being allowed download access to updates. Furthermore, the new virtualization technology impacts on the license management because the virtualized resources could be licensed apart. Microsoft Virtual Desktop Infrastructure (VDI) is the practice of hosting a desktop operating system within a virtual machine (VM) running on a centralized server. Windows VDI is licensed on standard and premium suites according to the Volume Licensing Program. Windows VDA (Virtual Desktop Access) is a device based license that was available at 100$/year/device through Volume Licensing Program.
- Adobe License Manager (ALM) software automates the tracking of Adobe desktop software licenses and enables businesses to proactively manage and administer volume product licenses while minimizing the resource and cost burden associated with manual license management.

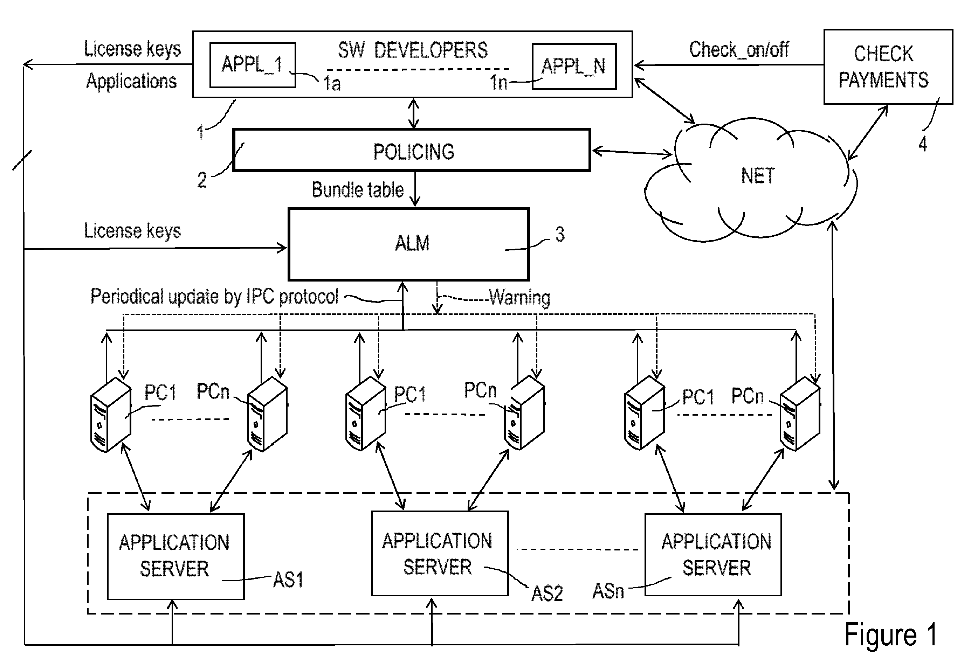

**Figure 1** shows a possible network architecture for distributing software applications and the respective license keys, and further distributing policing information about the software license opportunities reserved to the Clients (users' PCs). All functional blocks are connected to a network NET, preferably an IP network, and have installed the main communication protocols suitable for IP, such as HTTP, FTP, HTML, etc. The architecture of figure 1 is equally applicable to the known Licensing Managers so as the Licensing Manager according to the present invention, since the inventive features mainly concern two functional blocks named "Policing" and "ALM" (Application License Manager). The ALM manager is centralized in respect of end users represented by a plurality of Personal Computers (without limiting to the PCs the invention that will be described); a visual interface shall be installed in each PC counterpart. The Personal Computers and the ALM manager implement a Client-Server paradigm using an IPC protocol (Inter-Process Communication). Payments to the Software Developers are regulated by the Banks or any equipollent institutions charged to complete the transactions, preferably by means of credit cards, but other means of payment are admitted. The current policing for marketing software licenses is embedded in a "Bundle Table". When the licenses are offered by a single software corporation, there is no problem to implement the Bundle Table, since the offer only concerns software products of that company. So, that company is the sole which decides for discounts and receives the payments directly on its receiving bank. Furthermore it can transfer all License keys to the Application Severs without any problem, and exert a strict control from piracy. On the contrary, when the offer originates from several independent software developers, a third party organization is needed to implement the Bundle Table which shall be partitioned for each application provider; problems concerning secrecy and security could arise in transferring the License keys to the Application Servers.

Approaching top-down the network architecture of **figure 1**, a functional block 1 called "SW DEVELOPERS" includes a variable number N of software applications (APPL_1, ...., APPL_N) 1a, .... 1 N and the respective license keys. Block 1 communicates both with a "POLICING" block 2 and to a plurality of Application Servers AS1, ----, ASn. Each Application Server communicates with a respective cluster of Personal Computers PC1, ..., PCn. A centralized ALM manager 3 communicates with all Personal Computers PC1, ..., PCn of each clusters, obviously trough the network NET. A further block 4 represents the banks or equipollent institutions charged to complete transactions by means of credit cards.

In operation, the SW Developers 1 is a "Centralized Server" at the disposal of a pool of associated software providers intentioned to sell a variegated amount of software applications to any potential purchasers. The pool of all available License Keys is transferred to the ALM manager 3. Upon authorizations the available software products and the relevant License Keys are transferred to the requester Application Servers. The SW Developers 1 and Policing 2 work together to define a global offer of software licenses. This offer is detailed in the "Bundle Table" transferred to the ALM manager 3. According to the operation of known POLICING and ALM blocks 2 and 3, the requests for new licenses or renewals are triggered by the clients PC1 to PCn autonomously by "Periodical update by IPC protocol". Clients are informed about the license price list either on request or by periodical advertisement diffused to the registered users. Clients PC1, ...., PCn which intend to subscribe a license send to their Application Server the electronic orders for their subscriptions, providing to pay contextually by a credit card; alternatively, they may pay by bank transfer or other forms of payment not real time as the credit cards. Every addressed financial institution 5 completes the electronic transaction between the requester and the Software Owner block 1 and, on condition that the transaction went through, it prompts the SW Developers block 1 by sending the Check_on signal. The latter generates a new license key and sends it to the Application Server AS1, ..., ASn and the ALM manager 3 for updating the stored license keys. The SW Developers block 1 sends the new licensed product to the licensees through their Application Servers, but only in case the product were not already installed as a shareware version. The ALM manager controls the use of licenses on every local computer or on computers in a workgroup. Unauthorized access to licenses is prevented by a warning message and a logon dialog and user administration. If there is no corresponding license available locally, the client can use the license from the centralized license key server block 1.

### OUTLINED TECHNICAL PROBLEM

The following further preliminary definitions are needed about the license scope:
- Bundle can be intended as a valued set of applications to be licensed.
- Entity is either a single computer or any software or hardware component of an industrial system associated to at least a licensed application.

- "Size" is the number of entities associated to a single licensed application.
- Product is a set of applications licensed for an overall size.

According to the current policy, the price of a license for the same "Size" changes in respect of type of selected Bundle. The undergoing philosophy has a twofold nature: firstly, bundles more "rich" of applications are even more expensive to be maintained; secondly, the more rich a bundle the more valued by the users and the higher the price, in accordance with the market law. Till now there are as much licenses as the number of applications multiplied by the required sizes per bundle. As said above, on dependence of the chosen bundle, also the price of the added applications and sizes differs, so in order to increase the numbers of licenses for a cheaper bundle, specific licenses at lower price are sold. For example, let two bundles X, Q and three sizes Z, Y, W be assumed, with Q more expensive than X and size Z < size Y < size W, the following situation is resulting:
Bundle X
   - License Size Z for bundle X: - hypothetical price 100 Euro
   - License Size Y for bundle X: - hypothetical price 140 Euro
   - License Size W for bundle X: - hypothetical price 200 Euro
Bundle Q
   - License Size Z for bundle Q: - hypothetical price 150 Euro
   - License Size Y for bundle Q: - hypothetical price 210 Euro
   - License Size W for bundle Q: - hypothetical price 350 Euro

In the previous example the number of necessary licenses is six. Furthermore, in order to make a size upgrade it is necessary to foresee specific price list for upgrades of every possible combination. For example:
Bundle X
   - License Upgrade Size Z → Y: - hypothetical price 40 Euro
   - License Upgrade Size Y → W: - hypothetical price 60 Euro
   - License Upgrade Size Z → W: - hypothetical price 100 Euro
Bundle Q
   - License Upgrade Size Z → Y: - hypothetical price 60 Euro
   - License Upgrade Size Y → W: - hypothetical price 140 Euro
   - License Upgrade Size Z → W: - hypothetical price 200 Euro

In the previous example the number of necessary upgrading licenses is six and the total number of licenses is twelve.

When a consistent number of software applications has to be licensed, the number of bundles may be increased in order to offer many opportunities to the users. Thus an impressive number of combinations comes out soon, especially for upgrades, and the burden on the Application Manager increases consequently. Besides, the users could be confounded by the puzzle of licenses emerging from the Bundle Table and will call the help desk for clarifications almost inevitably. The problem arises because the licenses are coupled to any specific Size of the applications.

### OBJECT OF THE INVENTION

In the light of described state of the art, it is an object of the present invention to simplify the software license usage and management by refraining the users from buying a specific license for each relative size of an application successive to the first installation.

### SUMMARY OF THE INVENTION

To achieve said object, the subject of the present invention is a method for managing software license in a computer network according to Client-Server model, including the following steps performed at Server side:
- instituting license types for each software application according to differently composed bundles of applications to be licensed, the price of each license type being calculated according to the specificity of application, the size, and a weight assigned to increase in value the bundle the application belongs to;
- gathering from at least a software owner the license keys connected to the licenses for using new applications or using upgrades to new versions of them, and storing the collected license keys;
- checking unlicensed accesses to applications on every accessing client by comparison between said collected license keys and the license keys installed locally to the Client;
- sending first-type warning messages of license violation to the unlicensed clients when unlicensed accesses to applications are detected,
in which according to the invention it includes the further steps executed at Server side:
- receiving the requests for upgrading the sizes of licensed applications from the licensees;
- for every size upgrading request from a licensee calculating an equivalent number of credits, a free amount of which being purchasable by the licensees to be freely allocated to the applications independently of their version and bundle;
- comparing the calculated number of credits with the amount of credits at the disposal of the licensee, and if said calculated number is greater than said amount sending a second-type warning message of insufficient credits to the licensee, as described in claim 1.

Profitably the license dedicated steps (first hyphen to fourth) runs concurrently with the size-upgrading dedicated steps (fifth hyphen to seventh).

Furthermore, a computer program element can be provided, comprising computer program code for performing steps according to the above mentioned method when loaded in a digital processor of a computing device.

Additionally, a computer program product stored on a computer usable medium can be provided, comprising computer readable program code for causing a computing device to perform the above mentioned method.

Further subject of the invention is a system for managing software license in a computer network including:
- a foundation server configured for collecting applications to be licensed and the respective license keys, and to implement a policing based on clustering nominally the collected applications to be licensed into bundles differently valued (Bundle table) wherein applications have an initial size which could be successively upgraded on request;
- one or more application servers connected to the foundation server and to respective plurality of computer clients for delivering the received applications and the relevant license keys;
- a license management server connected to all previous network elements, the latter server having stored a program for implementing a first management process dedicated to distribute licenses for new software applications and licenses for upgrading to new versions of previously licensed applications, and further checking any attempt to violate a software license,
in which according to the invention:
- the license management server (3) having stored a further program for executing a second management process, concurrently, for calculating the number of credits which are needed for upgrading the size previously licensed for applications, checking that available credits at the requestersbe sufficient for upgrading, otherwise sending back a warning for insufficient credits.

In embodiments of the invention, the license management server may also advantageously be connected to the servers of a MES environment either deputed to control an industrial plant or serving connections of an intranet network, all software products needing licenses being preinstalled on corresponding network Servers and workstations..

Briefly, the sizes of bundled applications are chosen by the customer independently from the respective version, although a base license is always necessary for each application in order to authorize the specific version. When a version is updated it is always necessary to buy the license for upgrade this license is independent from the disposable credit amount, which shall be allocated to any possible upgrading of the size of that bundled application licensed anew for the upgraded version.

In other words a Bundle includes the licensed applications of a product solution. Bundles do not require order and are not priced but only weighed in order to be evaluated valued and so influencing the consumption of credits.

Additional features of the present invention which are believed to be novel are set forth with particularity in the appended claims.

According to an embodiment of the invention, said Server side is centralized for all Clients.

According to an alternative embodiment of the invention, said Server side is delocalized at each Client side.

According to an aspect of the invention, said first-type warning message propagates through the network to block unlicensed application.

According to an aspect of the invention, said second-type warning message also includes indication of residual credits needed to activate the requested size According to an aspect of the invention, said second-type warning message propagates through the network to prevent from undue usage of size uncovered by credits.

According to an aspect of the invention, if the calculated number of credits is smaller than the amount of credits at the disposal of the licensee, an authorization message propagates through the network for authorizing the usage of requested resources.

Profitably:
- The stored license keys are updated at each new license key generated when a payment went through.
- Applications outside the bundle policy are subjected to a different criterion, for example have a fixed price license independently from the size, nevertheless credits are allocated yet for the size upgrades and checking is maintained.
- All software owners who transfer the license keys derogate from issuing new licenses for upgrading the size of a licensed application.

### ADVANTAGES OF THE INVENTION

- The invention permits a more flexible price list, keeping prices in relation with running applications, assuming that base licenses have been installed on server clients. In a MES environment the MLFB (Maschinenlesbare Fabrikatenummer) number of orders is reduced.
- Credits can be allocated by the user on particular application (tags, equipments, client connections, etc.).
- Once the Credits have been purchased, they will be compatible with each version and bundle of the product. A customer can buy credit packs including a certain number of credits (for instance, 2000, 5000, 10000, 50000 ...), as more credit packs a customer buys, as more credits are at customer's disposal, so he can allocate them in order to use applications.
- Authorizations and used system versions will be independent of one another.
- The invention permits to modify the size of applications, therefore adding new entities, without changing the existing licenses but only buying the proper missing credits, so the size upgrading is non-invasive.

### BRIEF DESCRIPTION OF THE DRAWINGS

The features of the present invention, which are considered to be novel are set forth with particularity in the appended claims. The invention and its advantages may be understood with reference to the following detailed description of an embodiment thereof taken in conjunction with the accompanying drawings given for purely non-limiting explanatory purposes and wherein:
- **figure 1** schematizes, by functional blocks, a network architecture suitable to perform a centralized managing of software licenses either according to the known art or according to the present invention;
- **figure 2** differs from figure 1 because the management of software licenses is centralized on each Application Server;
- **figure 3** differs from figure 1 because the management of software licenses is decentralized inside each peripheral personal computer;
- **figure 4** shows a variegated scenario of software applications running on respective entities, in which authorizations for upgrading the size of licensed applications can be managed according to the present invention.

### DETAILED DESCRIPTION OF AN EMBODIMENT OF THE INVENTION

With reference to figure 1, the POLICING functional block 2 diversely operates in respect of the previous example concerning two bundles X, Q and three sizes Z, Y, W, with Q more expensive than X, and size Z < size Y < size W. In the following the new operating mode is represented in order to perform a comparison.

The base licenses are the same, so payments using Euro or conversion in credits are quite indifferent, although conversion in credits is preferable to have uniformity with the size upgrading.

### Bundle X

- License Size Z for bundle X: - hypothetical price 100 Euro (10 credits)
- License Size Y for bundle X: - hypothetical price 140 Euro (14 credits)
- License Size W for bundle X credits): - hypothetical price 200 Euro (20

### Bundle Q

- License Size Z for bundle Q: - hypothetical price 150 Euro (15 credits)
- License Size Y for bundle Q: - hypothetical price 210 Euro (21 credits)
- License Size W for bundle Q credits): - hypothetical price 350 Euro (35

In the previous example the number of necessary licenses is six. Furthermore, in order to make a size upgrade it is necessary to foresee specific price list for upgrades of every possible combination and calculates the corresponding amount of credits. For example, assuming that one Credit is equivalent to 10 Euro:
Bundle X
   - Upgrade Size Z → Y: - hypothetical price 4 credits
   - Upgrade Size Y → W: - hypothetical price 6 credits
   - Upgrade Size Z → W: - hypothetical price 10 credits
Bundle Q
   - Upgrade Size Z → Y: - hypothetical price 6 credits
   - Upgrade Size Y → W: - hypothetical price 9 credits
   - Upgrade Size Z → W: - hypothetical price 15 credits

In the previous example upgrading licenses are unneeded and the total number of license remains the same. The bundle table is modified in respect of one of the prior art so as to indicate credits for each size upgrade in dependence of bundles. Let be assumed unitary the weight associated to the cheaper bundle X, the same size Z is valued 4 credits in bundle X and 6 credits in bundle Q, so the weight of bundle Q is 1.5. The other sizes are calculated accordingly. The following is an example of bundle table.

**TABLE 1 (New Bundle Table)**

| Bundle Name | Weight | Size for Application A | Number of Credits A | Size for Application B | Number of Credits B |
|---|---|---|---|---|---|
| FIRST | 1 | 10 | 2400 | 10 | 4800 |
| SECOND | 1,5 | 10 | 3600 | 10 | 7200 |
| THIRD | 2 | 10 | 4800 | 10 | 9600 |

The operation of ALM functional Block 3 changes to the new Credit policy accordingly. There will be price constraints: one for bundle and one for applications. That is, an application price, in credits, will depend on the chosen bundle and the size, without modifying the necessary licenses. The previous considerations still apply. The software program checking licenses act both as server and client. The client-server model of computing is a distributed application structure that partitions tasks or workloads between the providers of a resource or service, called servers, and service requesters, called clients. Often clients and servers communicate over a computer network on separate hardware, but both client and server may reside in the same system. A server machine is a host that is running one or more server programs which share their resources with clients. A client does not share any of its resources, but requests a server's content or service function. Clients therefore initiate communication sessions with servers which await incoming requests. The Clients are entities defined as said above, namely, single personal computers or components of a Manufacturing Execution System (MES) such as: processors; connections to a Server; equipment that has to be modeled; equipment on which the Overall Equipment Effectiveness (OEE) is calculated; Clients that currently connect to the plant; tags that will be stored in the database; etc.

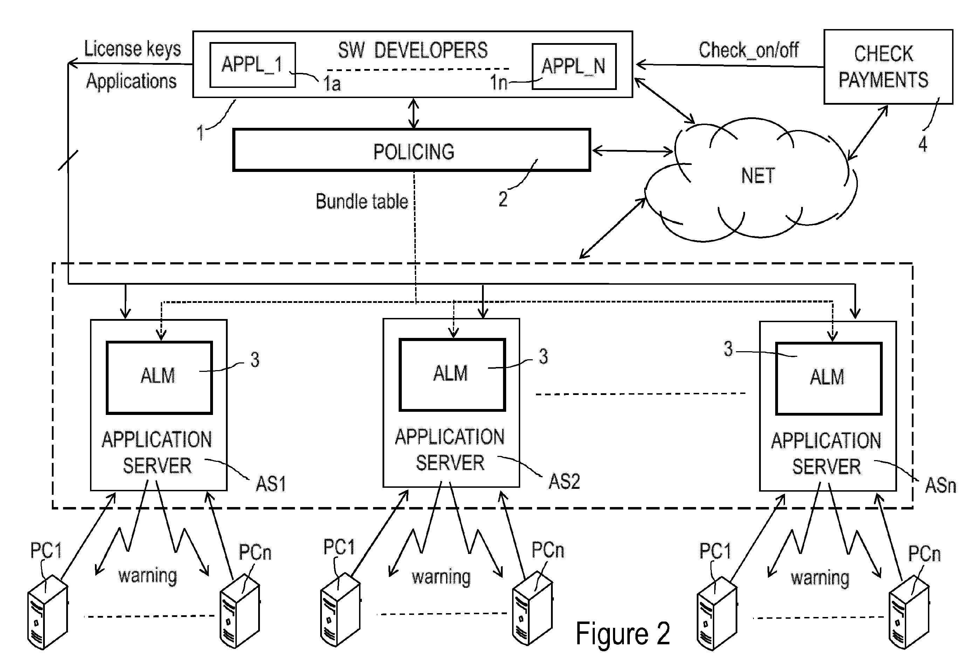

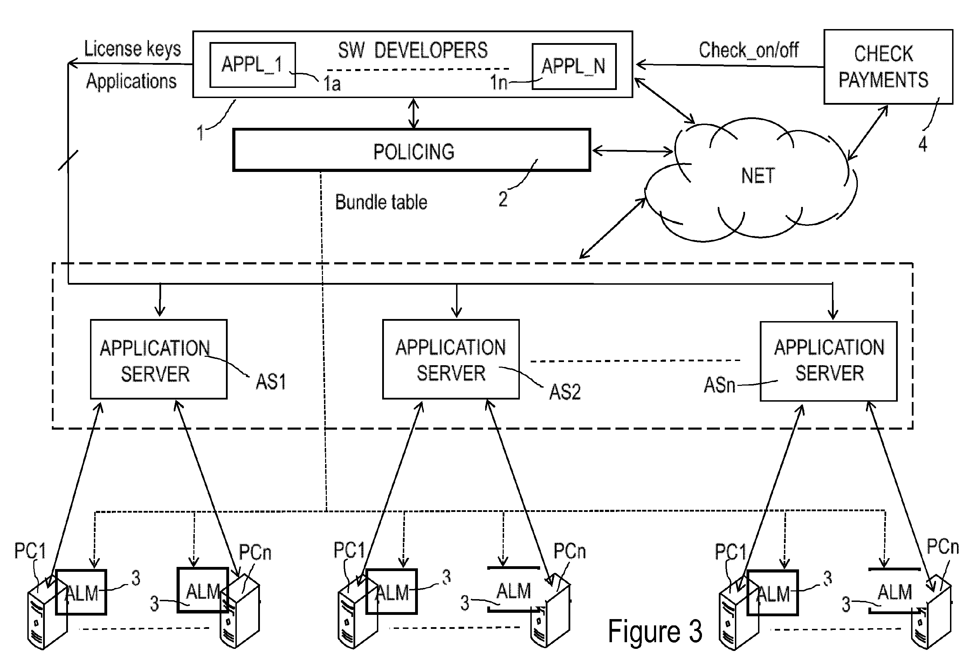

In the centralized approach of **figure 1****,** the ALM functional block 3 is a Server charged to manage the software license, in agreement with **TABLE 1,** towards a plurality of Clients indicated without limitation as PC1,..... PCn. The ALM license Server stands alone with respect to all Clients. **Figure 2** differs from figure 1 by the fact that the ALM license server resides in all Application Servers AS1,......, ASn, each one taking care for its own cluster of Clients PC1,..... PCn. **Figure 3** differs from figures 1 and 2 by the fact that the ALM license server is delocalized into each personal computer PC1,..... PCn acting as Server and Client simultaneously.

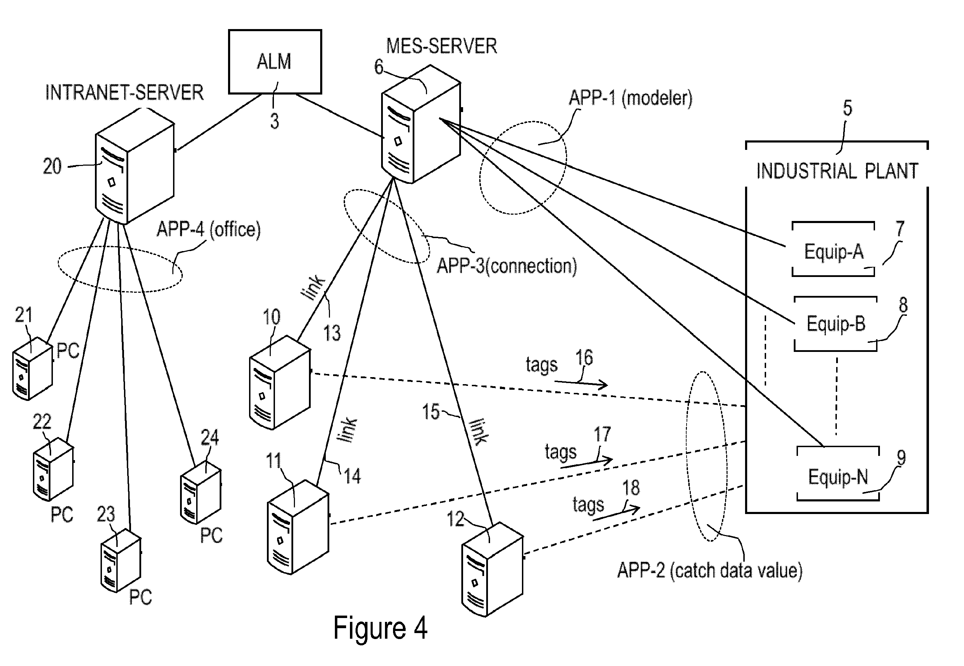

**Figure 4** is a variegated scenario useful to illustrate the allocation of licenses in agreement with **TABLE 1.** This scenario encompasses an industrial plant 5, a MES Server 6, an Intranet Server 20, and the license manager 3. Industrial plant 5 includes N equipments 7, 8, 9 (Equip-A, Equip-B, Equip-N) that are to be modeled. These equipments depend on the peculiarity of the industrial plant. Server 6 is connected to all equipments 7, 8, 9 and to three peripheral processors 10, 11, 12. These latter are connected to the Server 6 by means of three respective links 13, 14, 15. The peripheral processors 10, 11, 12 are also connected to the industrial plant 5 by three communication channels (dashed lines). The intranet server 20 is connected to four Personal Computers 21, 22, 23, 24. On the MES Server 6 is running an application APP-1 which offers the modeling environment to build the Plant Model, essential for defining the various behaviours of the plant. The equipments 7, 8, 9 are three entities needing credits, so the modeler APP-1 runs under a license with an established number of credits for a Size of three entities. On the processor machines 10, 11, 12 runs an application APP-2 which catches data values from the industrial plant 5. Data are associated to tags needing credits from the field (the plant), so the catcher APP-2 runs under a license with an established number of credits for three plurality of tag entities (tags). Tags can be usual XML tags (extensible Markup Language) or more sophisticated engineering objects, especially useful in a MES environment. In the last context, tags act as containers able to archive, aggregate, contextualize and analyze data from many data sources. Tags can be thought of as a wrapper around a source point (e.g. a PLC): predefined calculations, custom calculations, which can be defined the moment the tag is created. Likewise, the client processor machines 10, 11, 12 present on the control room of industrial plant 5 exchange data with the MES Server 6 and with the field. The connections to MES Server 6 on links 13, 14, 15 are entities associated to an application APP-3 charged to the connectivity that must be paid in credits under a license. As far as the Intranet Server 20 is concerned, on the four Personal Computers 21, 22, 23, 24 runs a multiform application APP-4 charged to the main office tasks, e.g. writing, spreadsheet, database, presentation, browsing, etc. Each Personal Computer represents an entity of the application APP-4 that needs credits under a license. The weights assignment to Bundle can be designed as in the following **TABLE 2:**

| **BUNDLE 1** Weight = 1 | **BUNDLE 2** Weight = 1,4 | **BUNDLE 3** Weight = 1,6 | **BUNDLE 4** Weight = 1,2 | **BUNDLE 5** Weight = 1,8 |
|---|---|---|---|---|
| APP-1 | APP-2 | APP-1 | APP-4 | APP-1 |
| | APP-3 | APP-2 | | APP-2 |
| | | APP-3 | | APP-3 |
| | | | | APP-4 |

The resulting Bundle Table for licensing the Applications with unitary sizes might be the following **TABLE 3:**

| **APPLICATIONS** | **SIZE** | **BUNDLES (weight)** | **CREDITS** |
|---|---|---|---|
| APP-1 | 1 Entity | BUNDLE 1 (1) | 2000 |
| | 1 Entity | BUNDLE 3 (1,6) | 3200 |
| | 1 Entity | BUNDLE 5 (1,8) | 3600 |
| APP-2 | 1 Entity | BUNDLE 2 (1,4) | 1400 |
| | 1 Entity | BUNDLE 3 (1,6) | 1600 |
| | 1 Entity | BUNDLE 5 (1,8) | 1800 |
| APP-3 | 1 Entity | BUNDLE 2 (1,4) | 800 |
| | 1 Entity | BUNDLE 3 (1,6) | 915 |
| | 1 Entity | BUNDLE 5 (1,8) | 1029 |
| APP-4 | 1 Entity | BUNDLE 4 (1,2) | 3200 |
| | 1 Entity | BUNDLE 5 (1,8) | 4800 |

Upgrading to N entities an Application licensed for a given Bundle needs additional credits roughly obtained multiplying by N-1 the unitary credits indicated in **TABLE 3.** For example, an upgrade to three equipments of APP-1 under BUNDLE 1 costs 4000 credits, while the same upgrade for BUNDLE 5 costs 7200 credits.

License Managing is performed by the ALM Server 3 on reception of the Bundle Table and the pool of License keys sent by a Foundation Server machine realized by the SW DEVELOPERS 1 and POLICING 2 together. In operation, two processes are running concurrently: a first one is dedicated to distribute licenses for new software applications and licenses for upgrading to new versions of previously licensed applications, while the second one calculates credits for upgrading the sizes of licensed applications. The first process may be inspired to two different strategies. According to a first strategy suitable for a MES environment:
1. All software products needing licenses in the MES environment are preinstalled on Servers and workstations. For example, with reference to figure 4 software products are preinstalled on MES-SERVER 6 (APP-1, APP-2, APP-3) and INTRANET-SERVER 20 (APP 4).
2. Servers where licenses will be installed are identified. To this aim the protocol at the Client side, running on each client machine, sends to the Server side the license requests for running corresponding applications while is connecting to and then every 10 minutes.
3. The needed licenses (license keys) are installed on the identified Servers. To this aim every 30 minutes the protocol at Server side, running on Foundation Server machine, checks if the license requests can be satisfied on the basis of licenses still available on the Server. On server side an application is in charge of counting the necessary number of credits to make the installed applications running. Licenses and Credits are configured, and a bundle table file is created which contains information about which applications and related entities the credits have been assigned to. In case the license requests can't be satisfied, the Server side will send message box to the client machine where the application violating license is running.

According to a second and more general strategy:
1. Servers where licenses will be installed are identified. To this aim the protocol at the Client side, running on each client machine, sends to the Server side the license requests for running corresponding applications while connecting to and then every 10 minutes.
2. Software products corresponding to the requested licenses are installed on the identified Servers as well as their product keys. To this aim every 30 minutes the protocol at Server side, running on Foundation Server machine, checks if the license requests can be satisfied on the basis of licenses still available on the Server. On server side an application is in charge of counting the necessary number of credits to make the installed applications running. Licenses and Credits are configured, and a bundle table file is created which contains information about which applications and related entities the credits have been assigned to. In case the license requests can't be satisfied, it will send message box to the client machine where the application violating license is running..

The second process which runs concurrently with either of the two above mentioned, is charged to calculate credits for upgrading the size of licensed applications dynamically.
- The protocol running on each Client side sends to the Server side any new request to the size increase of one or more licensed applications. Protocol running on Server side checks, upon reception, if the necessary licenses have been installed to the applications involved and if not the requests are refused.
- On server side an application is in charge of counting the necessary number of credits to be spent for each size upgrade. The required credits are calculated according to a weight factor dependent on the selected bundle. The sum of necessary credits must be smaller than the number of available credits, otherwise a warning message of insufficient credits is sent back to the client side.

Different network architectures are possible to the management of software licenses, they are substantially referable to stand alone or distributed. In the first case the license management is centralized as in **figure 1** and **figure 2** to some extent; in the other case as in **figure 3** there will be peripheral tools which will count how many licenses are locally necessary and which will transfer required credits amount to the server. It will be the same peripheral tool that will be in charge of notifying the possible license violations and insufficient credits.

Although the invention has been described with particular reference to a preferred embodiment, it will be evident to those skilled in the art that the present invention is not limited thereto, but further variations and modifications may be applied without departing from the scope of the invention as defined by the annexed claims.

## Claims

1. Method for managing software license in a computer network according to Client-Server protocol, including the following steps executed at the Server side (3):
- instituting (2) license types for each software application (APPL-1, .... APPL-N) according to differently composed bundles (Bundle table) of applications to be licensed, the price of each license type being calculated according to the specificity of application, the size (PC1-PCn; 7-9; 13-15; 16-18; 21-24) and a weight assigned to increase in value the bundle the application belongs to;
- gathering from at least a software owner (1) the license keys connected to the licenses for using new applications or using upgrades to new versions of them, and storing the collected license keys;
- checking unlicensed accesses to applications on every accessing Client (PC1-PCn; 10-12; 21-24) by comparison between said collected license keys and the license keys installed locally to the Client;
- sending first-type warning messages of license violation to the unlicensed clients when unlicensed accesses to applications are detected,
**characterized in that** it includes the further steps executed at the Server side (3):
- receiving the requests for upgrading the sizes of licensed applications from the licensees;
- for every size upgrading request from a licensee calculating an equivalent number of credits, a free amount of which being purchasable by the licensees to be freely allocated to the applications independently of their version and bundle;
- comparing the calculated number of credits with the amount of credits at the disposal of the licensee, and if said calculated number is greater than said amount sending a second-type warning message of insufficient credits to the licensee.

2. The method of claim 1, **characterized in that** license-tied steps run concurrently with size-upgrading steps.

3. The method of claim 1, **characterized in that** said Server side is centralized for all Clients.

4. The method of claim 1, **characterized in that** said Server side is delocalized at each Client side.

5. The method of claim 1, **characterized in that** said first-type warning message propagates through the network to block unlicensed application.

6. The method of claim 1, **characterized in that** said second-type warning message also includes indication of residual credits needed to activate the requested size.

7. The method of claim 1, **characterized in that** said second-type warning message propagates through the network to prevent from undue usage of size uncovered by credits.

8. The method of claim 1, **characterized in that** if the calculated number of credits is smaller than the amount of credits at the disposal of the licensee, an authorization message propagates through the network for authorizing the usage of requested resources.

9. The method of any one of the preceding claim, **characterized in that** said size encompass a variable number of different Entities, wherein an entity can be for example one of the following: personal computer (PC1-PCn; 21-24), equipment (7-9) of a plant (5) to be modeled in a MES environment, client connections (13-15), XML tags (16-18) identifying objects in a database.

10. System for managing software licenses in a computer network including:
- a foundation server (1, 2) configured for collecting applications to be licensed (APPL-1, ..., APPL-n) and the respective license keys, and to implement a policing (2) based on clustering nominally the collected applications to be licensed into bundles differently valued (Bundle table) wherein applications have an initial size which could be successively upgraded on request;
- one or more application servers (AS1,..., ASn) connected to the foundation server (1, 2) and to respective plurality of computer clients (PC1, ..., PCN) for delivering the received applications and the relevant license keys;
- a license management server (3) connected to all previous network elements, the latter server (3) having stored a program for implementing a first management process dedicated to distribute licenses for new software applications and licenses for upgrading to new versions of previously licensed applications, and further checking any attempt to violate a software license,
**characterized in that**,
- said license management server (3) having stored a further program for executing a second management process, concurrently, for calculating the number of credits which are needed for upgrading the size previously licensed for applications, checking that available credits at the requesters (PC1, ..., PCN) be sufficient for upgrading, otherwise sending back a warning for insufficient credits.

11. The system of claim 10, **characterized in that** said license management server (3) is also connected to the servers (6, 20) of a MES environment either deputed to control an industrial plant (5) or serving connections of an intranet network, all software products needing licenses (APP-1, APP-2, APP-3, APP-4) being preinstalled on corresponding network Servers (6, 20) and workstations (10-12; 21-24).
